# DEMANDE DE BREVET EUROPEEN

(11) **EP 1 847 674 A1**
(43) Date de publication de la demande: **24.10.2007**
(21) Numéro de dépôt: 07290459.2
(22) Date de dépôt: 13.04.2007
(51) Int. Cl.: E05G 1/14, C09D 9/00

(54) **Dispositif de sécurité pour le transport et/ou le stockage de valeurs imprimées**

(30) Priorité: 19.04.2006 FR 0603460
(71) Demandeur: BRINK'S FRANCE, 75009 Paris (FR)
(72) Inventeur: Besnard, Philippe, 45210 Griselles (FR)
(74) Mandataire: Kling, Simone

(57) **Abrégé**

L'invention concerne un dispositif de sécurité pour le transport et/ou le stockage de valeurs imprimées (2), comportant une enceinte (1) de réception de ces valeurs, associée à au moins un réservoir (3) contenant une composition de dégradation desdites valeurs (4), ledit réservoir étant adapté pour libérer la composition de dégradation (4) sur les valeurs (2) sous le contrôle de moyens de commande (5), où la composition de dégradation (4) utilisée comprend de l'acide chlorosulfonique en solution dans un solvant.

## Description

La présente invention a trait à un dispositif de sécurité destiné au transport et/ou au stockage de valeurs imprimées.

Par "valeurs imprimées", on entend, au sens de la présente description, tout document imprimé, notamment sur du papier ou du plastique, et présentant une valeur, fiduciaire ou non, susceptible de nécessiter une sécurisation de ladite valeur. En particulier, au sens où il est employé ici, le terme de "valeur imprimée" entend couvrir les billets de banque, chéquiers ou autres valeurs fiduciaires, ainsi que d'autres documents pouvant présenter une valeur, tels que des contrats, des titres, ou bien encore des papiers d'identité (passeports ou carte d'identité notamment).

Le transport et le stockage de valeurs de ce type sont actuellement réalisés en utilisant des enceintes de réception de ces valeurs, par exemple des coffres, des armoires blindées, des valises sécurisées de transport piétonnier, ou encore des cassettes de distributeurs de billets de banque.

Afin de décourager les tentatives d'effraction de ce type d'enceinte et en particulier des attaques contre les véhicules les transportant et leurs équipages, il a été proposé d'associer à ces enceintes des réservoirs de produits maculants (généralement des pigments et/ou colorants, véhiculés par un solvant) adaptés pour disperser ces produits maculants sur les valeurs en cas de tentative d'effraction, dans le but de marquer les valeurs pour les rendre inutilisables.

Cette solution ne se révèle toutefois pas entièrement satisfaisante. En effet, dans de nombreux cas, il s'avère difficile, voire impossible, d'obtenir un marquage indélébile des valeurs par maculation.

Ainsi, il est tout d'abord à noter qu'une dispersion de pigments et/ou colorants véhiculés par des solvants sur les valeurs à sécuriser n'est pas toujours adaptée pour effectuer une maculation effective, propre à assurer le marquage recherché. En particulier, elle se révèle inopérante sur des valeurs ayant un support hydrophobe, comme par exemple certains billets de banque à base de polyéthylène ou de polyuréthane, ou bien encore des cartes de crédits ou des documents plastifiés. Elle peut en outre se révéler inefficace même avec des valeurs à base de supports moins hydrophobes, telles que des valeurs à base de supports cellulosiques comme le papier, en fonction des additifs ajoutés au support. C'est notamment le cas avec de nombreux billets de banque à base d'un support papier, qui contiennent des agents imperméabilisants. Ces agents, destinés à assurer l'intégrité des valeurs vis-à-vis de l'eau et de l'humidité et à prolonger leur durée de vie, rendent en général la maculation relativement inefficace, voire inopérante.

D'autre part, même lorsqu'on obtient une maculation effective des valeurs, celle-ci ne peut en général pas être considérée comme indélébile. En effet, rien ne permet de garantir que des procédés de lavage et de traitement chimique des valeurs ainsi maculées n'ont pas été ou ne seront pas découverts, ce qui permettrait alors de laver et de traiter ces valeurs pour les remettre en circulation. Dans les faits, la maculation obtenue s'avère souvent réversible, dans la mesure où il existe des produits permettant la démaculation des valeurs lavage de certaines compositions de maculation sur des billets. Dès lors, la protection des valeurs par maculation n'est pas totalement fiable et elle ne joue plus son rôle dissuasif.

Pour pallier ces difficultés, il a plus récemment été décrit par la demanderesse des dispositifs de sécurité améliorés permettant, au lieu d'un marquage physique des valeurs, une destruction, ou tout au moins une modification irréversible, par voie d'une attaque chimique. Dans ce cadre, il a en particulier été préconisé l'emploi d'acide chlorosulfonique.

L'acide chlorosulfonique s'est en fait révélé particulièrement bien adapté à une destruction rapide de valeurs contenues dans des dispositifs de stockage ou de transport, où il permet notamment de rendre inutilisable des valeurs imprimées, notamment des billets de banque. Dans ce cadre, l'acide sulfonique permet notamment d'effacer les impressions des documents imprimés, par un phénomène de solubilisation des encres qui semble s'expliquer, entre autres, par une sulfonation de certains composants organiques des encres d'impression, notamment les liants.

En outre, il a été mis en évidence que les produits de décomposition gazeux de l'acide chlorosulfonique, contenant notamment le chlorure d'hydrogène (HCl), permettent de déstructurer des supports à base de papier, en les rendant extrêmement fragiles et cassants, ces supports s'effritant dans la main après contact avec les produits de décomposition, ce qui les rend inutilisables.

Plus précisément, dans les dispositifs sécurisés de stockage ou de transport où il est employé, l'acide chlorosulfonique se décompose selon la réaction suivante :

HClSO₃ + H₂O => HCl + H₂SO₄

Le HCl étant gazeux dans les conditions normales, la réaction entraîne la formation d'un volume de gaz et une surpression au sein de l'enceinte du dispositif. La réaction est en outre exothermique, si bien qu'elle induit une augmentation de la température dans l'enceinte pressurisée. Dans ces conditions, les gaz de décompositions dégagés circulent librement dans l'enceinte, assurant ainsi un contact intime et efficace avec l'ensemble des valeurs et assurant une destruction particulièrement efficace des valeurs à sécuriser.

En dépit de ces différents avantages, l'emploi d'acide chlorosulfonique se révèle problématique en pratique, et ce justement du fait des produits de décomposition gazeux qu'il engendre.

En effet, ces produits de décomposition, particulièrement virulents, ont un impact négatif sur l'environnement, en particulier HCl, qui est considéré comme toxique à de très faibles teneurs. De ce fait, il convient de neutraliser de façon efficace les gaz produits. Une telle neutralisation s'avère en fait très difficile à réaliser, notamment compte tenu de la vitesse de formation des gaz, qui rend par exemple inefficace des adsorbants classiques tels que du charbon actif ou de l'alumine.

En outre, la génération des gaz de décomposition induit une surpression au sein de l'enceinte de stockage des valeurs, ce qui pose des problèmes pour assurer une étanchéité efficace de l'enceinte employée.

Un but de la présente invention est de fournir un dispositif de sécurisation de valeurs imprimées qui soit efficace, à savoir qui permette de rendre inutilisables des valeurs imprimées de manière fiable, rapide et définitive, mais qui évite les inconvénients précités, liés à la décomposition de l'acide chlorosulfonique.

A cet effet, selon un premier aspect, l'invention fournit un dispositif de sécurité pour le transport et/ou le stockage de valeurs imprimées, comportant une enceinte de réception de ces valeurs, associée à au moins un réservoir contenant une composition de dégradation desdites valeurs, ledit réservoir étant adapté pour libérer la composition de dégradation sur les valeurs sous le contrôle de moyens de commande, où ladite composition de dégradation comprend de l'acide chlorosulfonique, en solution dans un solvant (S) de cet acide.

Avantageusement, le solvant (S) qui solubilise l'acide chlorosulfonique dans la composition de dégradation est un solvant organique chloré ou fluoré, et de préférence chloré. Des solvants chlorés particulièrement adaptés à titre de solvant (S) sont le chloro-1-butane, le chloro-2-propane, le 1,2,3-trichloropropane, le dichlorométhane, le chlorohexane, le trichloroéthylène, ainsi que les mélanges de ces solvants.

Les inventeurs ont maintenant mis en évidence que la solubilisation de l'acide chlorosulfonique au sein d'un solvant, notamment des types précités, inhibe le phénomène de décomposition de cet acide en HCl et H₂SO₄ , tel qu'il est classiquement observé en l'absence d'un tel solvant.

Ainsi, dans le dispositif de l'invention, l'acide chlorosulfonique en solution dans le solvant (S) assure son rôle classique dit de "solubilisation" des encres, tel qu'il a notamment été mis en évidence dans FR 04 06603, et ce sans conduire parallèlement au phénomène de décomposition gazeuse mis à profit par exemple dans les dispositifs décrits dans FR 04 10456.

Plus précisément, dans le dispositif de l'invention, l'acide chlorosulfonique permet une désolidarisation des pigments des encres déposées sur des valeurs imprimées, si bien qu'un simple traitement par de l'eau (immersion dans un bain d'eau ou lavage) ou même un simple frottement de la surface des valeurs ainsi modifiée conduit à un entraînement des pigments et donc à un effacement des impressions, rendant ainsi les valeurs inutilisables. Le cas échéant, l'acide chlorosulfonique permet également une attaque des parties métalliques éventuellement présentes sur les valeurs, telles que des hologrammes, ou bien le fil de sécurité, dans le cas spécifique des billets de banque. Ces réactions sont très rapides, et généralement complètes dans un laps de temps tout au plus de l'ordre de la seconde, et généralement bien inférieur (typiquement de l'ordre de la centaine de milliseconde, voire moins).

Les encres d'impression déposées (typiquement par impression en taille douce ou en offset) sur les valeurs imprimées sécurisées selon l'invention comprennent en général des pigments organiques ou minéraux, intimement mélangés avec un liant.

Les pigments organiques ou minéraux utilisés sont généralement choisis parmi les produits suivants :
- Noir de carbone ;
- Vert oxyde de chrome ;
- Dioxyde de titane ;
- bleu de phtalocyanine ;
- composé azoïque ;
- vert 7, 36,
- violet 23 ;
- vernis fluorescents sous rayonnement ultra-violet.

Le liant, également appelé véhicule dans le cas de l'impression offset, est quant à lui généralement choisi parmi les produits suivants :
- les résines dures, oligomères ou polymères non cristallins solides à température ambiante et solubles dans les solvants faibles. Il s'agit notamment des résines phénoliques modifiées par la colophane et de constituants fluides (huiles végétales contenant au moins 20 % d'huile de soja, distillats de pétrole, résines alkydes) ;
- Les huiles végétales d'esters de triglycérides d'acides gras insaturés ;
- les huiles siccatives comme l'huile de lin ;
- les colophanes extraites des conifères (pin) ou issues de la gomme, du bois ou du tall-oil et leurs dérivés ;
- les vernis polymères plastiques ;
- la gélatine.

Sans vouloir être lié à une théorie particulière, il est supposé que, dans le cadre de la présente invention, l'acide chlorosulfonique dissous en milieu solvant a une action de sulfonation sur certains des composés organiques de l'encre, notamment les liants, ce qui détruirait la cohésion de l'encre des impressions. Dans certains cas, cette réaction pourrait impliquer aussi d'autres composés organiques présents en surface des valeurs imprimées.

Selon un aspect particulier, l'invention a également pour objet cette utilisation d'une solution d'acide chlorosulfonique dans un solvant dudit acide, de préférence un solvant organique du type précité, dans un dispositif de sécurité pour le transport et/ou le stockage de valeurs imprimées, pour dégrader au moins partiellement l'encre d'impression desdites valeurs en cas d'effraction ou de tentative d'effraction, en vue de rendre lesdites valeurs inutilisables.

Avantageusement, la composition de dégradation utilisée dans le dispositif de l'invention comprend, en plus de l'acide chlorosulfonique et du solvant (S), un ou plusieurs pigments ou colorants, destinés à la maculation des valeurs. Dans ce cadre, on utilise des composés non susceptibles d'être dégradés par l'acide chlorosulfonique, et de préférence solubles ou dispersibles dans le solvant (S). Avantageusement, on peut typiquement utiliser un ou plusieurs pigments ou colorants choisis parmi les composés suivants :
- les phtalocyanines de cuivre ;
- le noir de carbone ;
- les oxydes ferriques ;
- les osides de titane ;
- le pigments de zinc ;
- les bleus de fer ;
- les pigments de cadmium.

Cette addition de pigments ou colorants ouvre notamment la possibilité d'un marquage des valeurs sécurisées suite à une effraction, ce qui permet notamment un marquage des lots à sécuriser, systématiquement requis dans le domaine du transport de fonds.

En outre, l'addition de pigments ou colorants permet surtout une sécurisation encore accrue des valeurs, en interdisant définitivement toute possibilité de réutiliser les valeurs traitées. En effet, en utilisant conjointement l'acide chlorosulfonique et des colorants ou pigments, on obtient dans le même temps (i) une désolidarisation de l'encre vis-à-vis du support des valeurs et (ii) une maculation de la surface. La maculation obtenue rend les valeurs inutilisables en l'état, obligeant ainsi les auteurs d'une effraction qui souhaiteraient réutiliser les valeurs à les laver au préalable. Or, un tel traitement de démaculation conduit immanquablement à une élimination au moins partielle, sinon totale, des impressions, rendant là encore les valeurs inutilisables.

Une composition de dégradation particulièrement adaptée dans le cadre de la présente invention comprend typiquement :
- de 10% à 80% en volume (par exemple de 15% à 50%, notamment de 15% à 25%, et de préférence de l'ordre de 20% en volume) d'acide chlorosulfonique ;
- de 10% à 80 % en volume d'au moins un solvant organique chloré, ce solvant chloré étant avantageusement choisi parmi le chloro-1-butane, le chloro-2-propane, le 1,2,3-trichloropropane, le dichlorométhane,le chlorohexane, le trichloroéthylène, et les mélanges de ces solvants ;
- de 0,5 à 2% en masse, par rapport à la masse dudit solvant chloré, d'au moins un pigment ou colorant, de préférence du type précité.

Les compositions de ce type, qui n'ont jamais été décrites à la connaissance de la demanderesse, constituent, selon un autre aspect, encore un autre objet particulier de la présente invention.

Quelle que soit la nature exacte de la composition de dégradation employée, le dispositif de sécurité de l'invention la mettant en oeuvre peut en outre comporter l'une ou plusieurs des caractéristiques suivantes :
- les moyens de commande du dispositif sont adaptés pour déclencher le fonctionnement d'un déclencheur pyrotechnique de dispersion du produit sur les valeurs, associé au réservoir ;
- le dispositif est un distributeur automatique de billets (DAB), un conteneur de transport de fonds ou un conteneur de stockage de fonds ;
- les valeurs imprimées comportent un support à base de papier ou bien à base de plastique.

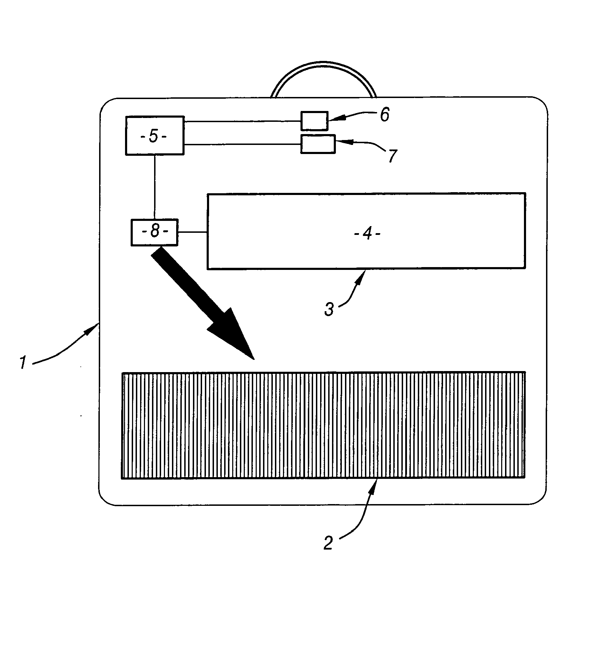

L'invention sera encore davantage illustrée par la description ci-après, donnée uniquement à titre d'exemple, et faite en référence à la figure unique ci-annexée, qui est un schéma synoptique représentant schématiquement la structure générale d'un dispositif selon l'invention.

Plus précisément, la figure unique ci-jointe représente un dispositif de sécurité pour le transport et/ou le stockage de valeurs, qui comporte une enceinte de réception de ces valeurs 1, se présentant par exemple sous la forme d'une valise sécurisée ou d'une cassette de distributeur de billets de banques. L'enceinte 1 peut également être formée par un coffre, une armoire blindée, etc., disposé dans un véhicule, un bâtiment, etc. Cette enceinte 1 contient les valeurs imprimées 2 à sécuriser, qui sont typiquement des billets de banque, des titres, des chèques, des cartes de crédits, des contrats, ou bien encore des cartes d'identités ou des passeports.

Cette enceinte 1 est associée à au moins un réservoir 3 contenant une composition de dégradation 4, à base d'acide chlorosulfonique en solution dans un solvant, typiquement choisi parmi le chloro-1-butane, le chloro-2-propane, le 1,2,3-trichloropropane, le dichlorométhane, le chlorohexane, et le trichloroéthylène, un solvant tout particulièrement adapté étant le dichlorométhane. Le trichloroéthylène se révèle également efficace dans le cadre de l'invention, mais ce solvant est cependant moins intéressant, compte tenu de sa toxicité. En règle générale, la composition 4 contient en outre un colorant ou un pigment destiné à la maculation des valeurs. Cette composition de dégradation 4 est susceptible d'être libérée en cas d'événements particuliers, notamment en cas de tentative d'effraction ou d'effraction, sous le contrôle de moyens de commande 5.

Les moyens de commande 5 sont reliés à des moyens de détection d'un événement de déclenchement, typiquement un contact 6 d'ouverture non autorisée de la valise ou bien encore des moyens 7 de contrôle de l'intégrité de celle-ci, pour, permettre aux moyens de commande 5 de déclencher le fonctionnement de moyens 8 de libération de la composition de dégradation 4 sur les valeurs 2, en cas de tentative d'effraction. Bien entendu, d'autres moyens de commande peuvent être envisagés, tels que par exemple des moyens de détection de la réception ou non d'un signal de sécurité, comme cela est connu.

Les moyens de libération 8 peuvent comprendre par exemple un déclencheur pyrotechnique associé au réservoir 3. Un tel déclencheur pyrotechnique, à base d'explosif, permet en général à la fois de briser le réservoir 3 et d'assurer une bonne dispersion de la composition de dégradation sur les valeurs. Il permet en outre, le cas échéant, de briser les emballages éventuels des valeurs, permettant ainsi une aspersion optimale.

La dispersion de la composition 4 sur les valeurs ainsi obtenue conduit à une dégradation de la cohésion des impressions sur le support, rendant ces impressions fragiles et susceptibles d'être détériorées en tout ou partie. Le temps nécessaire pour assurer cette fragilisation est en général de l'ordre de quelques secondes au plus.

A l'issue du traitement, les impressions des valeurs imprimées peuvent dans certains cas disparaître au moins en en partie, ce qui rend les valeurs inutilisables.

Dans d'autres cas, plus fréquents, on obtient une fragilisation telle que les impressions subsistent sur les valeurs, mais en étant rendues effaçables, en tout ou partie, par un simple frottement ou par un lavage à l'eau, ce qui les rend dans ce cas pratiquement inutilisables, la fragilisation de l'encre étant très aisément détectable. Dans ce cas de figure, la présence de pigments ou colorants dans la composition 4 finit d'assurer la sécurisation. En effet, ces pigments ou colorants conduisent à une maculation des valeurs, les rendant ainsi détectables. Pour être réutilisées les valeurs devraient subir un traitement de démaculation, ce qui conduirait alors à un effacement des impressions.

Ainsi, le dispositif de sécurité permet d'assurer, en cas d'effraction, une modification irréversible des valeurs, les rendant en conséquence de ce fait inutilisables et sans valeur, ce qui est propre à dissuader toute tentative d'effraction dudit dispositif.

## Revendications

1. Dispositif de sécurité pour le transport et/ou le stockage de valeurs imprimées (2), comportant une enceinte de réception (1) desdites valeurs imprimées, associée à au moins un réservoir (3) contenant une composition de dégradation desdites valeurs (4), ledit réservoir étant adapté pour libérer la composition de dégradation (4) sur les valeurs (2) sous le contrôle de moyens de commande (5), où la composition de dégradation (4) utilisée comprend de l'acide chlorosulfonique en solution dans un solvant (S) dudit acide.

2. Dispositif selon la revendication 1, où le solvant (S) est un solvant chloré choisi parmi le chloro-1-butane, le chloro-2-propane, le 1,2,3-trichloropropane, le dichlorométhane, le chlorohexane, le trichloroéthylène, et les mélanges de ces solvants.

3. Dispositif selon la revendication 1 ou selon la revendication 2, dans lequel la composition de dégradation comprend en outre au moins un pigment ou colorant destiné à la maculation des valeurs.

4. Dispositif selon la revendication 3, dans lequel la composition de dégradation comprend :
- de 10% à 80% en volume d'acide chlorosulfonique ;
- de 10% à 80 % en volume d'au moins un solvant organique chloré ; et
- de 0,5 à 2% en masse, par rapport à la masse dudit solvant chloré, d'au moins un pigment ou colorant,

5. Dispositif selon l'une quelconque des revendications 1 à 4, où les moyens de commande (5) sont adaptés pour déclencher le fonctionnement d'un déclencheur pyrotechnique (8) de dispersion du produit sur les valeurs, associé au réservoir (3).

6. Dispositif selon l'une des revendications 1 à 5, **caractérisé en ce qu'**il s'agit d'un distributeur automatique de billets (DAB), un conteneur de transport de fonds, ou un conteneur de stockage de fonds.

7. Utilisation, dans un dispositif de sécurité pour le transport et/ou le stockage de valeurs imprimées, d'une solution d'acide chlorosulfonique dans un solvant dudit acide pour dégrader au moins partiellement l'encre d'impression desdites valeurs imprimées en cas d'effraction ou de tentative d'effraction.

8. Composition de dégradation pour un dispositif de sécurité selon l'une des revendications 1 à 5, comprenant :
- de 10% à 80% en volume d'acide chlorosulfonique ;
- de 10% à 80 % en volume d'au moins un solvant organique chloré ; et
- de 0,5 à 2% en masse, par rapport à la masse dudit solvant chloré, d'au moins un pigment ou colorant,

9. Composition selon la revendication 8, où le solvant organique chloré est choisi parmi le chloro-1-butane, le chloro-2-propane, le 1,2,3-trichloropropane, le dichlorométhane, le chlorohexane, le trichloroéthylène, et les mélanges de ces solvants .
